# EUROPÄISCHE PATENTSCHRIFT

(11) **EP 1 427 087 B1**
(45) Veröffentlichungstag und Bekanntmachung des Hinweises auf die Patenterteilung: **11.01.2006**
(21) Anmeldenummer: 02026199.6
(22) Anmeldetag: 26.11.2002
(51) Int. Cl.: H02K 1/27, H02K 5/132

(54) **Rotor für einen nasslaufenden Elektromotor**
Rotor for a submersible electric motor
Rotor pour un moteur submersible

(43) Veröffentlichungstag der Anmeldung: 09.06.2004
(73) Patentinhaber: GRUNDFOS A/S, 8850 Bjerringbro (DK)
(72) Erfinder: Kjär, Oluf, 8850 Bjerringbro (DK); Rasmussen, Viggo, 8850 Bjerringbro (DK); Stähr, Uffe, 8382 Hinnerup (DK)
(74) Vertreter: Hemmer, Arnd

(56) Entgegenhaltungen:
- DE-A- 2 059 018
- DE-A- 19 610 736

## Beschreibung

Die Erfindung betrifft einen Rotor für einen Elektromotor, insbesondere für einen nasslaufenden Elektromotor, wie er beispielsweise in Umwälzpumpen eingesetzt wird.

Rotoren für Elektromotoren, welche als Nassläufer in Umwälzpumpen eingesetzt werden, weisen üblicherweise ein Rotorpaket, in dem Permanentmagnet oder Wicklungen angeordnet sind, auf. Durch den Rotor erstreckt sich eine Welle, welche mit dem Laufrad der Pumpe verbunden ist. An der dem Laufrad der Pumpe zugewandten Seite des Rotors ist üblicherweise ein Axiallager zur Aufnahme der auftretenden Axialkräfte angeordnet. Da in bestimmten Betriebssituationen auch in entgegengesetzte Richtung gerichtete Axialkräfte auftreten können, wird am entgegengesetzten Ende des Rotors üblicherweise ein Stoppring aus einem Lagerwerkstoff eingesetzt, welcher als Gleitlager dient, um die auftretenden Kräfte übertragen zu können.

Aus DE 2 059 018 ist ein Läufer für einen Elektromotor kleiner Leistung bekannt, bei welchem das Blechpaket des Läufers allseitig von einer Schicht eines gießfähigen Metalls wie Aluminium umgeben ist und aus diesem Metall einstückig sowohl die Leiterstäbe als auch die Kurzschlussringe an den Stirnseiten des Läufers ausgebildet sind. Dabei sind die Anlaufscheiben an den Läuferstirnseiten als Teile der Wellenstümpfe einstückig mit aus Metall gegossen.

Es ist Aufgabe der Erfindung, einen Rotor für einen Elektromotor zu schaffen, welcher einen vereinfachten Aufbau aufweist und eine kostengünstigere Fertigung ermöglicht. Diese Aufgabe wird durch einen Rotor mit dem in Anspruch 1 angegebenen Merkmalen gelöst.

Der erfindungsgemäße Rotor für einen Elektromotor weist an seinen beiden axialen Enden jeweils eine Abdeckscheibe auf. Die Abdeckscheiben sind aus Kunststoff gefertigt und an den Rotor angegossen. An einer ersten Abdeckscheibe, vorzugsweise der dem Laufrad einer Pumpe zugewandten Abdeckscheibe ist einstückig mit der Abdeckscheibe eine Anlage für ein Axiallager ausgebildet. Dies ermöglicht, dass das Axiallager direkt an die Abdeckscheibe angesetzt werden kann, ohne das Befestigungselemente oder Zwischenlagen zwischen Abdeckscheibe und Axiallager eingesetzt werden müssen, um das Axiallager mit der erforderlichen Präzision an der Abdeckscheibe auszurichten. Erfindungsgemäß wird einstückig mit der Abdeckscheibe eine definierte Anlage für ein Axiallager geschaffen. An der anderen Abdeckscheibe am entgegengesetzten Ende des Rotors ist ein in axialer Richtung nach außen gerichteter Stoppring einstückig mit der Abdeckscheibe ausgebildet. Der Stoppring bildet einen die Rotorwelle konzentrisch umgebenden Ring, welcher in axialer Richtung von der Abdeckscheibe vorsteht. Dieser Ring ist gemeinsam mit der Abdeckscheibe aus einem Lagerwerkstoff gefertigt und dient dazu, Axialkräfte in der dem Axiallager entgegengesetzten Richtung übertragen zu können. Der Stoppring bildet somit ein als Gleitlager wirkendes Notlager, welches nur in Ausnahmesituationen Axialkräfte übertragen muss, da die üblicherweise auftretenden Axialkräfte von dem Axiallager an der ersten Abdeckscheibe übertragen werden.

Die Abdeckscheiben sind aus Kunststoff gefertigt und die Anlage für das Axiallager und der Stoppring jeweils einstückig mit der zugehörigen Abdeckscheibe gegossen. Dies ermöglicht eine sehr kostengünstige Fertigung der Abdeckscheiben mit der Anlage für das Axiallager bzw. dem Stoppring, da die Bauteile im Spritzgussverfahren an den Rotor angegossen werden können. Es wird dabei ein Kunststoff verwendet, welcher die für den Stoppring erforderlichen Lagereigenschaften, insbesondere ausreichende Verschleißfestigkeit und geringe Reibungskoeffizienten, aufweist.

Weiter bevorzugt ist im Inneren des Rotors eine die Rotorwelle umgebende und die Abdeckscheiben miteinander verbindende Hülse vorgesehen. Diese Hülse dichtet den Rotor zur Rotorwelle hin ab, was insbesondere bei nasslaufenden Elektromotoren wichtig ist.

Weiter bevorzugt ist die Hülse mit der Rotorwelle vergossen. Die Hülse ist dazu vorzugsweise ebenfalls aus Kunststoff ausgebildet und ermöglicht eine leichte Befestigung des Rotors auf der Rotorwelle durch Vergießen mittels der Hülse. Dabei kann auch leicht die erforderliche Zentrierung erreicht werden und gleichzeitig eine ausreichende Abdichtung des Rotors sichergestellt werden.

Weiter bevorzugt ist dabei die Hülse einstückig mit den beiden Abdeckscheiben ausgebildet. So kann die Hülse in einem Arbeitsgang mit den Abdeckscheiben aus Kunststoff gegossen werden. Dies ermöglicht eine rationelle Fertigung des Rotors und aufgrund der einstückigen Ausgestaltung von Abdeckscheiben und Hülse eine gute Abdichtung des Rotors.

An der Rotorwelle kann zusätzlich zumindest ein Mitnehmer ausgebildet sein, welcher mit der Hülse formschlüssig im Eingriff ist. Der eine Mitnehmer oder mehrere Mitnehmer gewährleisten eine zuverlässige Drehmomentübertragung zwischen Rotor bzw. Hülse und Rotorwelle.

Zusätzlich ist in der Hülse vorzugsweise zumindest ein Entlüftungskanal ausgebildet, welcher sich in axialer Richtung durch den Rotor erstreckt und zu den Außenseiten der Abdeckscheiben hin geöffnet ist. Ein solcher Entlüftungskanal ist bei nasslaufenden Elektromotoren erforderlich, um eine Entlüftung des dem Laufrad abgewandten Bereiches des Motorgehäuses zu erreichen.

Die Anzahl der Entlüftungskanäle ist zweckmäßigerweise ungleich der Anzahl der Mitnehmer an der Welle. Auf diese Weise kann sichergestellt werden, dass zumindest ein Mitnehmer außerhalb eines Entlüftungskanals mit der Hülse in Eingriff ist und zumindest ein Entlüftungskanal vorhanden ist, welcher nicht durch einen Mitnehmer blockiert ist. Es wird somit sichergestellt, dass sich Mitnehmer und Entlüftungskanäle nicht gegenseitig in ihrer Funktion beeinträchtigen.

Dazu ist weiter bevorzugt, die Anzahl der Mitnehmer gerade und die Anzahl der Entlüftungskanäle ungerade oder umgekehrt auszubilden. So kann immer zumindest ein freier Entlüftungskanal und ein Mitnehmer, welcher im formschlüssigen Eingriff mit der Hülse ist, sichergestellt werden.

Vorzugsweise handelt es sich bei dem Rotor um einen Permanentmagnetrotor. Solche Permanentmagnetrotoren werden beispielsweise in nasslaufenden Umwälzpumpen eingesetzt und bedürfen als Massenprodukt einer kostengünstigen Fertigung.

Weiter bevorzugt ist der Rotor umfänglich von einem Mantel umgeben, welcher einstückig mit zumindest einer der beiden Abdeckscheiben ausgebildet ist. Vorzugsweise ist der Mantel einstückig mit beiden Abdeckscheiben ausgebildet. Der Mantel dichtet den Rotor nach außen ab, was insbesondere bei nasslaufenden Motoren wichtig ist. Bevorzugt ist der Mantel gemeinsam mit den Abdeckscheiben und gegebenenfalls der Hülse einstückig aus Kunststoff gespritzt bzw. gegossen, so dass der gesamte Rotor in einem Arbeitsgang vergossen werden kann. Es können somit mehrere einzelne Arbeitsgänge eingespart werden, so ist es insbesondere nicht mehr erforderlich, im Anschluss an das Anbringen der Abdeckscheiben einen umgebenen Mantel im Jacketier-Verfahren auf den Rotor aufzubringen. Vorzugsweise wird der Mantel einstückig mit den Abdeckscheiben und der an diesen ausgebildeten Anlage für das Axiallager sowie dem Stoppring ausgebildet.

Vorzugsweise ist an zumindest einer der Abdeckscheiben zumindest ein Turbulenzelement angeordnet. Ein solches Turbulenzelement kann als in axialer Richtung nach außen vorstehender Vorsprung ausgebildet sein. Vorzugsweise ist eine Mehrzahl von Vorsprüngen vorgesehen, welche die Rotorwelle an der äußeren Oberfläche der Abdeckscheibe konzentrisch umgeben und von der Rotorwelle beabstandet sind. Diese Turbulenzelemente bzw. Vorsprünge dienen zur Umwälzung der Flüssigkeit in dem Rotorgehäuse. Dadurch wird erreicht, dass Luft, welche sich in dem Rotorgehäuse befindet, mit dem Fluid in dem Rotorgehäuse vermischt wird und aus dem Rotorgehäuse herausgefördert werden kann. Dazu wird das Fluid, welches mit der Luft vermischt ist, zur Mitte, d. h. zur Rotorwelle hin gefördert, so dass es durch entsprechende Entlüftungskanäle am Umfang der Rotorwelle aus dem Rotorgehäuse abgeführt werden kann. Erfindungsgemäß sind auch die Turbulenzelemente bevorzugt einstückig mit der jeweiligen Abdeckscheibe ausgebildet. So ist es möglich alle wesentlichen Elemente an der Außenseite des Rotors einstückig mit der Abdeckscheibe, vorzugsweise aus Kunststoff zu fertigen. Diese ermöglicht eine äußerst kostengünstige Fertigung des Rotors.

Ferner kann in zumindest einer der Abdeckscheiben zumindest ein sich in axialer Richtung, d. h. im Wesentlichen parallel zu der Rotorwelle, erstreckendes Durchgangsloch vorgesehen sein. Vorzugsweise sind mehrere solcher Durchgangslöcher in beiden Abdeckscheiben vorgesehen. Diese Durchgangslöcher dienen zum einen dazu, während der Fertigung bzw. des Angießens bzw. Anspritzens der Abdeckscheibe den Rotorkern in dem Werkzeug zu fixieren und zu positionieren. Dazu können in dem Werkzeug Stifte vorgesehen sein, welche den Rotorkern positionieren und beim Spritzen der Abdeckscheibe als Kerne dienen, so dass beim Entfernen der Stifte die Durchgangslöcher in den Abdeckscheiben zurückbleiben. Ferner verbessern die Durchgangslöcher die Kühlung des Rotorkerns, da durch diese das umgebende Fluid näher an den Rotorkern herangeführt werden kann und die Oberfläche der Abdeckscheibe für eine bessere Wärmeabgabe vergrößert wird.

Die genannten Bauteile aus Kunststoff des erfindungsgemäßen Rotors, d. h. insbesondere die einstückig ausgebildeten Abdeckscheiben, die die Rotorwelle umgebende Hülse sowie ein dem Rotor umfänglich umgebender Mantel werden vorzugsweise aus PPS gefertigt bzw. gegossen. Dieser Kunststoff hat den Vorteil einer sehr geringen Wasseraufnahme. Dies bedeutet, dass der Kunststoff bei Kontakt mit Wasser nur in sehr geringem Maße aufquillt, wodurch schädliche Spannungen und Kräfte im Inneren des Rotors vermieden werden können. Dies ist insbesondere bei Permanentmagnetmotoren wichtig, da auftretende Zugkräfte bzw. Zugspannungen zur Zerstörung der Magneten führen könnten. Durch die Verwendung von PPS können diese Spannungen im Inneren des Rotors verringert werden, so dass der Rotorkern von negativen Krafteinflüssen geschützt wird.

Nachfolgend wird die Erfindung beispielhaft anhand der beigefügten Figuren beschrieben. In diesen zeigt:
- Fig. 1: eine perspektivische Gesamtansicht des Rotors,
- Fig. 2: eine Seitenansicht des Rotors,
- Fig. 3: eine Schnittansicht entlang der Linie A-A in Fig. 2 und
- Fig. 4: eine Draufsicht auf den Rotor in Richtung des Pfeil B in Fig. 2.

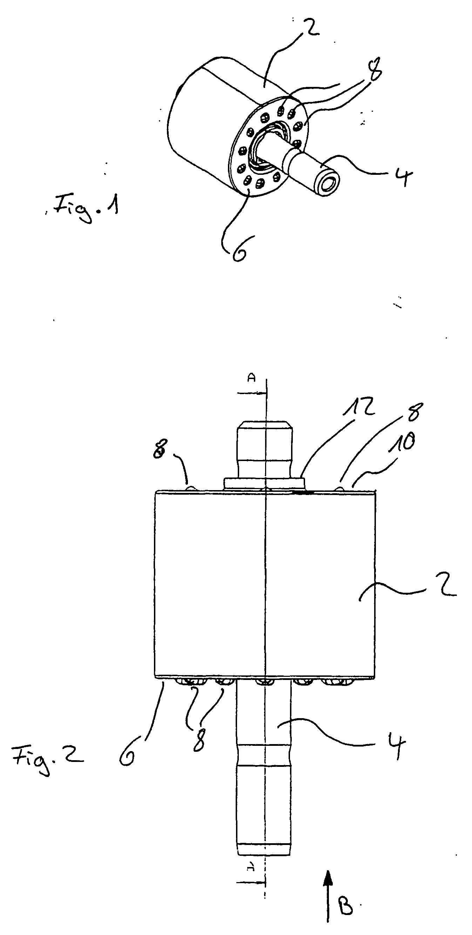

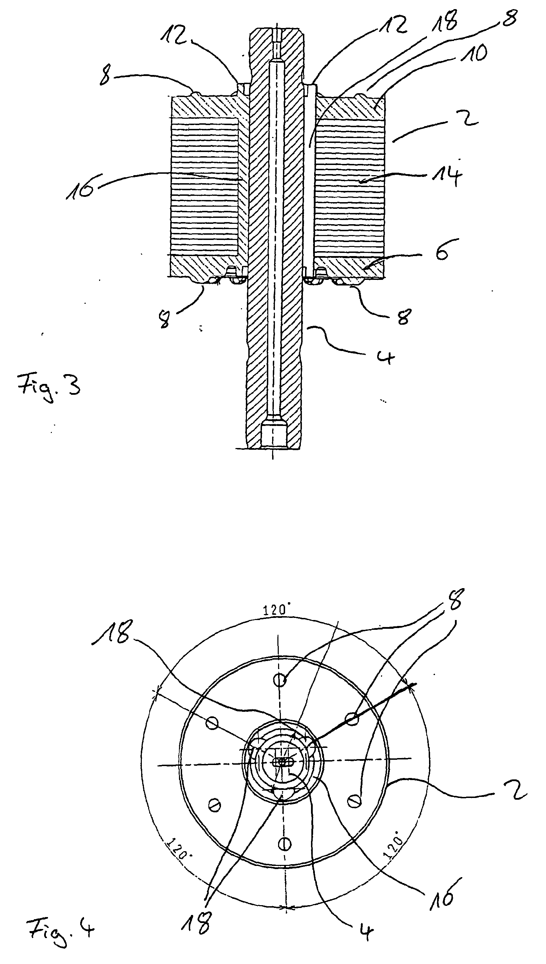

In der perspektivischen Gesamtansicht gemäß Fig. 1 ist der Rotor 2 mit eingesetzter Rotorwelle 4 dargestellt. Auf das freie Ende der Rotorwelle 4 wird später ein Laufrad einer Pumpe aufgesetzt. Die Abdeckscheibe 6 an dem dem freien Ende der Rotorwelle 4 zugewandten Ende des Rotors 2 ist eine Anlage für ein Axiallager ausgebildet. Die hier gezeigte Anlage ist nur beispielhaft und kann auch in anderer Weise als definierte Anlage für ein Axiallager ausgebildet sein. An die beiden Abdeckscheiben 6 und 10 sind axial nach außen vorstehende Vorsprünge 8 (siehe Figuren 2 und 3) ausgebildet, welche als Turbulenzkörper bzw. Turbulenzelemente dienen. Diese Turbulenzelemente sorgen für eine Umwälzung der Flüssigkeit, was die Entlüftung des Rotorgehäuses bei einem nasslaufenden Elektromotor verbessert, da die Luft auch aus den Randbereichen eines Rotorgehäuses durch die Bewegung des Fluids herausgespüft werden kann.

Fig. 2 zeigt eine Seitenansicht des Rotors 2 gemäß Fig. 1. Die erste Abdeckscheibe 6, mit dem die Anlage für das Axiallager bildenden Vorsprüngen 8, ist demjenigen Ende der Rotorwelle 4 zugewandt, welche bei einer Pumpe das Laufrad tragen soll. Die am entgegengesetzten Ende des Rotors 2 angeordnete Abdeckscheibe 10 weist einen die Rotorwelle 4 konzentrisch umgebenden Stoppring 12 auf, welcher einstückig mit der Abdeckscheibe 10 ausgebildet ist. Der Stoppring 12 ist einstückig mit der Abdeckscheibe 10 aus einem Lagerwerkstoff gefertigt und dient als Gleitlager, welches in bestimmten Situationen auftretende Axialkräfte überträgt, welche entgegengesetzt zu den von dem an der Abdeckscheibe 6 anliegenden Axiallager zu übertragenden Kräften gerichtet sind.

Fig. 3 zeigt eine Schnittansicht des Rotors gemäß Fig. 2 entlang der Linie A-A in Fig. 2. Der in diesem Ausführungsbeispiel gezeigte Rotor 2 weist in seinem Inneren Ringmagnete 14 auf, welche zwischen den Abdeckscheiben 6 und 10 angeordnet sind und die Rotorwelle 4 ringförmig umgeben. Im Inneren der Ringmagnete 14 ist eine Hülse 16 angeordnet, welche die Rotorwelle 4 umgibt und an dieser anliegt. Die Hülse 16 ist vorzugsweise mit der Welle 4 vergossen und auf diese Weise mit der Welle 4 fest verbunden. Die Hülse 16 ist einstückig mit den Abdeckscheiben 6 und 10 ausgebildet, d. h. als ein Teil mit diesen im Spritzguss aus Kunststoff gefertigt. Auf diese Weise wird ein innen und stirnseitig gedichteter Rotor 2 geschaffen, welcher fest mit der Rotorwelle 4 verbunden ist. Zusätzlich können zwischen Rotorwelle 4 und Hülse 16 Mitnehmer bzw. Eingriffselemente vorgesehen sein, welche eine formschlüssige Verbindung gewährleisten und auf diese Weise ein Durchrutschen verhindern. Dazu können an der Rotorwelle Einbuchtungen oder Vorsprünge vorgesehen sein, in welche das Material der Hülse 16 eingreift.

An der Abdeckscheiben 6 und 10 sind stirnseitig einstückig mit diesen die Vorsprünge 8 ausgebildet, welche als Turbulenzkörper dienen. An der zweiten Abdeckscheibe 10 ist stirnseitig der Stoppring einstückig mit der Abdeckscheibe ausgebildet.

Ferner sind in der Hülse 16 sich axial erstreckende Entlüftungskanäle 18 vorgesehen, welche zu den Stirnseiten der beiden Abdeckscheiben 6 und 10 hin geöffnet sind und bei einem Nasslaufmotor eine vollständige Entlüftung des Motorgehäuses gewährleisten. Dabei bewirken die Turbulenzkörper 8, dass bei der Umwälzung der Flüssigkeit die Luft gemeinsam mit der Flüssigkeit zum Zentrum gefördert wird, so dass die Luft durch die Entlüftungskanäle 18 hindurch abgeführt werden kann.

Zusätzlich kann der Rotor 2 von einem hier nicht gezeigten Mantel umgeben sein. Ein solcher Mantel kann als separates Edelstahlteil aufjacketiert werden. Ein solcher Mantel schützt einen Rotorkern vor schädlichen Zugspannungen, da die von dem aufgepressten bzw. aufgeschrumpften Mantel erzeugten Druckkräfte eventuell auftretenden Zugkräften in dem Rotor entgegenwirken können. Solche Zugkräfte können beispielsweise durch Aufquellen des für die Abdeckscheiben und die Hülse 16 verwendeten Kunststoffes beim Kontakt mit dem Fluid, insbesondere mit Wasser, entstehen. Bei Permanentmagnetmotoren könnten derartige Zugkräfte bzw. Zugspannungen zur Zerstörung der im Rotor angeordneten Magnete führen. Alternativ kann der Mantel ebenfalls einstückig aus Kunststoff mit den Abdeckscheiben 6 und 10 gefertigt werden, so dass zusammen mit der Hülse 16 ein rundum vergossener Rotor geschaffen werden kann. Da alle äußeren Elemente des Rotors in einem Arbeitsgang durch Spritzgießen gefertigt werden können, ist eine sehr kostengünstige Herstellung des Rotors möglich. Ferner können an den Abdeckscheiben alle nötigen Anschluss- und Lagerteile wie auch die Vorsprünge 8 und der Stoppring 12 einstückig mit ausgebildet werden.

Fig. 4 zeigt eine Draufsicht auf den Rotor in Richtung des Pfeils B in Fig. 2. In Fig. 4 ist zu erkennen, dass drei Entlüftungskanäle 18 vorgesehen sind, welche die Rotorwelle 4 gleichmäßig über den Umfang verteilt umgeben.

Auch wenn die Erfindung am Beispiel eines nasslaufenden Permanentmagnetrotors beschrieben worden ist, so lässt sich die erfindungsgemäße Ausgestaltung der Abdeckscheiben und/oder die einstückige Ausbildung von Abdeckscheiben und äußerem Mantel auch bei anderen Rotoren für Elektromotoren einsetzten.

### Bezugszeichenliste

- 2: Rotor
- 4: Rotorwelle
- 6: Abdeckscheibe
- 8: Vorsprünge
- 10: Abdeckscheibe
- 12: Stoppring
- 14: Ringmagnete
- 16: Hülse
- 18: Entlüftungskanal

## Patentansprüche

1. Rotor für einen Elektromotor, an dessen beiden axialen Enden jeweils eine Abdeckscheibe (6, 10) angeordnet ist, wobei an einer Abdeckscheibe (6) einstückig mit dieser eine definierte Anlage (8) für ein Axiallager ausgebildet ist und an der anderen Abdeckscheibe (10) ein in axialer Richtung nach außen gerichteter ein axiales Notlager bildender Stoppring (12) einstückig mit der Abdeckscheibe (10) ausgebildet ist, **dadurch gekennzeichnet, dass** die Abdeckscheiben (6, 10) aus Kunststoff gefertigt und die Anlage (8) für das Axiallager und der Stoppring (12) jeweils einstückig mit der zugehörigen Abdeckscheibe (6, 10) gegossen sind.

2. Rotor nach Anspruch 1, **dadurch gekennzeichnet, dass** in dessen Inneren eine eine Rotorwelle (4) umgebende und die Abdeckscheiben (6, 10) miteinander verbindende Hülse (16) vorgesehen ist.

3. Rotor nach Anspruch 2, **dadurch gekennzeichnet, dass** die Hülse (16) mit der Rotorwelle (4) vergossen ist.

4. Rotor nach Anspruch 2 oder 3, **dadurch gekennzeichnet, dass** die Hülse (16) einstückig mit den beiden Abdeckscheiben (6, 10) ausgebildet ist.

5. Rotor nach einem der Ansprüche 2 bis 4, **dadurch gekennzeichnet, dass** an der Rotorwelle (4) zumindest ein Mitnehmer ausgebildet ist, welcher mit der Hülse (16) formschlüssig in Eingriff ist.

6. Rotor nach einem der Ansprüche 2 bis 5, **dadurch gekennzeichnet, dass** in der Hülse (16) zumindest ein Entlüftungskanal (18) ausgebildet ist, welcher sich in axialer Richtung durch den Rotor (2) erstreckt und zu den Außenseiten der Abdeckscheiben (6, 10) hin geöffnet ist.

7. Rotor nach Anspruch 6, **dadurch gekennzeichnet, dass** die Anzahl der Entlüftungskanäle (18) ungleich zu der Anzahl der Mitnehmer an der Rotorwelle (4) ist.

8. Rotor nach Anspruch 7, **dadurch gekennzeichnet, dass** die Anzahl der Mitnehmer gerade und die Anzahl der Entlüftungskanäle (18) ungerade oder umgekehrt ist.

9. Rotor nach einem der vorangehenden Ansprüche, **dadurch gekennzeichnet, dass** es sich um einen Permanentmagnetrotor (2) handelt.

10. Rotor nach einem der vorangehenden Ansprüche, **dadurch gekennzeichnet, dass** der Rotor (2) umfänglich von einem Mantel umgeben ist, welcher einstückig mit zumindest einer der beiden Abdeckscheiben (6, 10) ausgebildet ist.

11. Rotor nach einem der vorangehenden Ansprüche, **dadurch gekennzeichnet, dass** an zumindest einer der Abdeckscheiben zumindest ein Turbulenzelement angeordnet ist.

12. Rotor nach einem der vorangehenden Ansprüche, **dadurch gekennzeichnet, dass** in zumindest einer Abdeckscheibe zumindest ein sich in axialer Richtung erstreckendes Durchgangsloch vorgesehen ist.

## Claims

1. A rotor for an electric motor on whose two axial ends in each case a cover disk (6, 10) is arranged, wherein a defined abutment (8) for an axial bearing is formed on one cover disk (6) as one piece with this, and a stop ring (12) forming an axial emergency bearing which is outwardly directed in the axial direction is formed on the other cover disk (10) as one piece with the cover disk (10), **characterised in that** the cover disks (6, 10) are manufactured of plastic and the abutment (8) for the axial bearing, and the stop ring (12) in each case are cast as one piece with the associated cover disk (6, 10).

2. A rotor according to claim 1, **characterised in that** in its inside there is provided a sleeve (16) which surrounds the rotor shaft (4) and which connects the cover disks (6, 10) to one another.

3. A rotor according to claim 2, **characterised in that** the sleeve (16) is cast with the rotor shaft (4).

4. A rotor according to claim 2 or 3, **characterised in that** the sleeve (16) is formed as one piece with the two cover disks (6, 10).

5. A rotor according to one of the claims 2 to 4, **characterised in that** at least one catch is formed on the rotor shaft (4), which is engaged with the sleeve (16) with a positive fit.

6. A rotor according to one of the claims 2 to 5, **characterised in that** at least one bleed channel (18) is formed in the sleeve (16), said bleed channel extending through the rotor (2) in the axial direction and being open to the outer sides of the cover disks (6, 10).

7. A rotor according to claim 6, **characterised in that** the number of bleed channels (18) is unequal to the number of catches on the rotor shaft (4).

8. A rotor according to claim 7, **characterised in that** the number of catches is even and the number of bleed channels (18) is odd or vice versa.

9. A rotor according to one of the preceding claims, **characterised in that** it is the case of a permanent magnet rotor (2).

10. A rotor according to one of the preceding claims, **characterised in that** the rotor (2) is peripherally surrounded by a casing which is formed as one piece with at least one of the two cover disks (6, 10).

11. A rotor according to one of the preceding claims, **characterised in that** at least one turbulence element is arranged on at least one of the cover disks.

12. A rotor according to one of the preceding claims, **characterised in that** at least one through-hole extending in the axial direction is provided in at least one cover disk.

## Revendications

1. Rotor pour un moteur électrique, à chacune des deux extrémités axiales duquel est disposé un disque de recouvrement (6, 10), une structure d'appui définie (8) pour un palier axial étant formée sur un disque de recouvrement (6), d'un seul tenant avec celui-ci, tandis que sur l'autre disque de recouvrement (10), une bague d'arrêt (12), orientée vers l'extérieur en direction axiale et constituant un palier de secours axial, est formée d'un seul tenant avec le disque de recouvrement (10), **caractérisé en ce que** les disques de recouvrement (6, 10) sont réalisés en matière plastique, et la structure d'appui (8) pour le palier axial et la bague d'arrêt (12) sont chacune moulées en une seule pièce avec le disque de recouvrement (6, 10) correspondant.

2. Rotor selon la revendication 1, **caractérisé en ce qu'**il est prévu, en son intérieur, un fourreau (16) entourant un arbre de rotor (4) et reliant les disques de recouvrement (6, 10) l'un à l'autre.

3. Rotor selon la revendication 2, **caractérisé en ce que** le fourreau (16) est coulé avec l'arbre de rotor (4).

4. Rotor selon la revendication 2 ou 3, **caractérisé en ce que** le fourreau (16) est formé d'un seul tenant avec les deux disques de recouvrement (6, 10).

5. Rotor selon l'une des revendications 2 à 4, **caractérisé en ce que** sur l'arbre de rotor (4) est formé au moins un toc d'entraînement, qui est en prise par complémentarité de formes avec le fourreau (16).

6. Rotor selon l'une des revendications 2 à 5, **caractérisé en ce que** dans le fourreau (16) est formé au moins un canal de purge d'air (18), qui s'étend en direction axiale à travers le rotor (2) et est ouvert sur les faces extérieures des disques de recouvrement (6, 10).

7. Rotor selon la revendication 6, **caractérisé en ce que** le nombre des canaux de purge d'air (18) est différent du nombre des tocs d'entraînement sur l' arbre de rotor (4).

8. Rotor selon la revendication 7, **caractérisé en ce que** le nombre des tocs d'entraînement est pair et le nombre des canaux de purge d'air (18) est impair ou inversement.

9. Rotor selon l'une des revendications précédentes, **caractérisé en ce qu'**il s'agit d'un rotor à aimant permanent (2).

10. Rotor selon l'une des revendications précédentes, **caractérisé en ce que** le rotor (2) est entouré, sur sa périphérie, par une enveloppe qui est formée d'un seul tenant avec l'un au moins des deux disques de recouvrement (6, 10).

11. Rotor selon l'une des revendications précédentes, **caractérisé en ce que** sur l'un au moins des disques de recouvrement est disposé au moins un élément de turbulence.

12. Rotor selon l'une des revendications précédentes, **caractérisé en ce que** dans au moins un disque de recouvrement est prévu au moins un trou de passage s'étendant en direction axiale.
